# EUROPEAN PATENT APPLICATION

(11) **EP 2 485 482 A1**
(43) Date of publication of application: **08.08.2012**
(21) Application number: 11181757.3
(22) Date of filing: 19.09.2011
(51) Int. Cl.: H04N 5/76, G11B 20/00, H04N 5/913

(54) **Recording apparatus and recording method**

(30) Priority: 03.02.2011 JP 2011022070
(71) Applicant: Kabushiki Kaisha Toshiba, Tokyo 105-8001 (JP)
(72) Inventor: Okada, Koji, Tokyo, 105-8001 (JP)
(74) Representative: HOFFMANN EITLE

(57) **Abstract**

One embodiment provides a recording apparatus including: a reception module configured to receive video data of a first number of channels or fewer; a management module configured to manage a storage region of a storage medium in units of a divided region, the divided region being provided in plurality correspondingly with the first number; a determination module configured to determine recording channels; an allocation module configured to allocate a part of the divided regions to each of the recording channels when the determination module determines the plurality of recording channels; and a control module configured to control such that video data of the recording channels is written into the allocated divided regions, wherein, when the determination module determines to change the recording channels, the allocation module allocates one or more of the recording channels after change to one or more of the divided regions previously allocated for the recording channels before change.

## Description

### CROSS-REFERENCE TO RELATED APPLICATION(S)

This application claims priority from Japanese Patent Application No. 2011-022070 filed on February 3,2011, the entire contents of which are incorporated herein by reference.

### FIELD

Embodiments described herein relate generally to a recording apparatus and a recording method.

### BACKGROUND

In a recording apparatus with plural tuners technology exists for performing full recording of plural channels. Full recording is a recording method that allocates storage regions on a storage medium for use in loop recording, and when storage has progressed from the initial to the final recording point in the recording region recording returns to the initial point and over-write recording starts.

However, when loop recording is performed for plural channels, sometimes there is a change in the number of channels for loop recording due, for example, to operational image by a user. It would be preferable for loop recording of plural channels to continue even when the number of channels for loop recording has changed.

### BRIEF DESCRIPTION OF DRAWINGS

A general architecture that implements the various feature of the present invention will now be described with reference to the drawings. The drawings and the associated descriptions are provided to illustrate embodiments and not to limit the scope of the present invention.
Fig. 1 illustrates a usage state of a TV set of an embodiment.
Fig. 2 illustrates a system configuration of a TV set of an embodiment.
Fig. 3 illustrates a functional configuration of a TV set of an embodiment.
Fig. 4A to 4C illustrate processing for loop recording with a TV set of an embodiment.
Fig. 5A to 5C illustrate processing for loop recording with a TV set of an embodiment.
Fig. 6A to 6C illustrate processing for loop recording with a TV set of an embodiment.
Fig. 7A to 7C illustrate processing for loop recording with a TV set of an embodiment.
Fig. 8 illustrates a process flow for loop recording with a TV set of an embodiment.

### DETAILED DESCRIPTION

In general, one embodiment provides a recording apparatus including: a reception module configured to receive video data of a first number of channels or fewer; a management module configured to manage a storage region of a storage medium in units of a divided region, the divided region being provided in plurality correspondingly with the first number; a determination module configured to determine recording channels; an allocation module configured to allocate a part of the divided regions to each of the recording channels when the determination module determines the plurality of recording channels; and a control module configured to control such that video data of the recording channels is written into the allocated divided regions, wherein, when the determination module determines to change the recording channels, the allocation module allocates one ormore of the recording channels after change to one or more of the divided regions previously allocated for the recording channels before change.

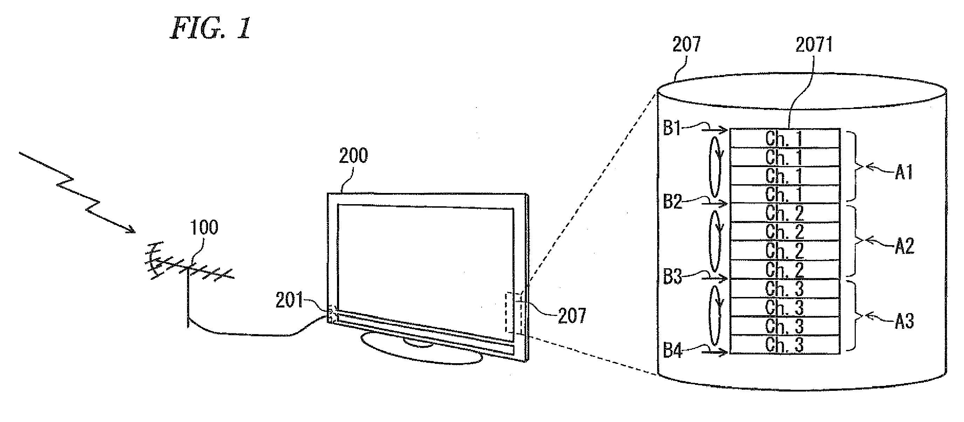

Explanation follows regarding an example usage state of a recording apparatus according to an embodiment, with reference to Fig. 1. The recording apparatus according to the embodiment is realized, for example, with a TV set 200.

An antenna 100 receives a broadcast signal transmitted from a broadcasting station. The antenna 100 outputs the received broadcast signal to the TV set 200.

The TV set 200 includes a receiver 201 and a storage medium 207, and has a function for storing video data of the TV broadcasts received by the receiver 201 in the storage medium 207. The TV set 200 is capable of loop recording simultaneously video data of plural channels in a loop recording region 2071 in the storage medium 207. This loop recording is a recording method in which a loop recording storage region is set aside separate from the storage region used for normal recording, and repeated over-write recording is performed in the loop recording region.

The TV set 200 allocates, for example, storage regions A1 to A3 of the storage medium 207 as respective loop recording storage regions, such that one channel of video data can be continuously recorded in one of the storage regions A1 to A3. When TV set 200 has, for example, recorded from position B1 to position B2 in the region A1 the recording position is looped back to position B1, and over-write recording is performed from position B1 over the data already stored in regionAl. Similarly, when the TV set 200 has recorded from position B2 to position B3 in the region A2, recording is then performed back again from position B2, and when recording has been performed from position B3 to position B4 in the region A3 then recording returns to position B3 and over-write recording is performed.

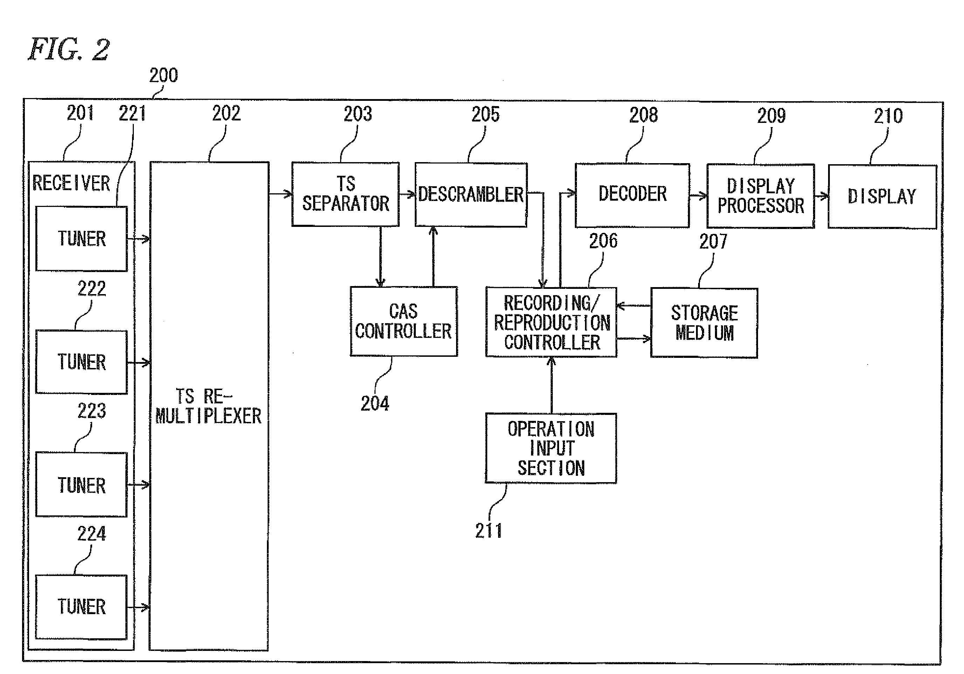

When the number of channels being loop recorded simultaneously changes the TV set 200 of the present embodiment is capable of continuing suitable recording processing, as described in detail with reference to Fig. 2 to 6C.

Fig. 2 illustrates a system configuration of a TV set 200. The TV set 200 includes the receiver 201, a TS re-multiplexer 202, a TS separator 203, a CAS controller 204, a descrambler 205, a recording/reproduction controller 206, the storage medium 207, a decoder 208, a display processor 209, a display 210 and an operation input section 211.

The receiver 201 is connected to the antenna 100 (not shown in Fig. 2) and receives television broadcast signals. The receiver 201 is equipped with tuners 221 to 224. The tuners 221 to 224 receive television broadcast signals by synchronizing to the channel frequency of the television broadcast to be received. The tuners receive, for example, broadcast signals of terrestrial digital broadcasts and BS digital broadcasts . The TV set 200 is provided with plural tuners and so can receive broadcasts from plural channels simultaneously. The receiver 201 may also be configured to receive video data of IP television through a network.

The TS re-multiplexer 202 functions to re-multiplex broadcast data received with the receiver 201. The TS re-multiplexer 202 re-multiplexes streams of plural channels received by the receiver 201 into a single Transport Stream (TS), and outputs the re-multiplexed TS to the TS separator 203.

The TS separator 203 separates out from the single re-multiplexed TS data including: an Elementary Stream (ES) of encoded audio data and picture data; an encrypted data Entitlement Control Message (ECM); and an Event Information Table (EIT) listing data such as start times and program names for broadcast programs. The TS separator 203 outputs the ES to the descrambler 205, the ECM to the CAS controller 204 and the EIT to the operation input section 211.

The encrypted data ECM separated in the TS separator 203 is input to the CAS controller 204. The CAS controller 204 uses a work key (Kw) stored on a CAS card (not shown in the drawings) to decipher the encrypted signal of the ECM separated in the TS separator 203. The work key is set for each broadcast operator.

The CAS controller 204 then compares attribute data of the program included in the ECM with contract data stored on the CAS card and determines whether viewing is permitted. The CAS controller 204 decodes a scramble key (Ks) when viewing is allowed and outputs to the descrambler 205.

The descrambler 205 has a function for de-scrambling the audio data and picture data input from the TS separator 203. The descrambler 205 employs the scramble key (Ks) input from the CAS controller 204 to perform de-scrambling. The descrambler 205 outputs the de-scrambled audio data and picture data to the recording/reproduction controller 206.

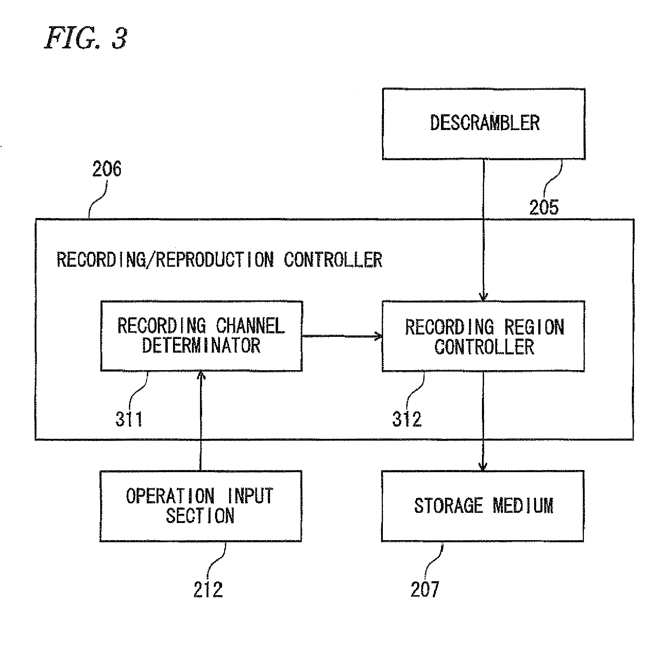

The recording/reproduction controller 206 controls recording/reproduction processing. During recording processing the audio data and the picture data is collected together into a single stream for each channel and stored on the storage medium 207. The recording/reproduction controller 206 has functionality for loop recording on the storage medium 207 the respective picture data and audio data of the plural channels received by the receiver 201. When the number of channels for loop recording has been changed, the recording/reproduction controller 206 is also capable of allocating recording regions for recording the channels for loop recording after the change, and can continue to perform loop recording. Details regarding loop recording are explained with reference to Fig. 3 to 6C.

During reproduction processing the recording/reproduction controller 206 outputs picture data and audio data stored on the storage medium 207 to the decoder 208.

The storage medium 207 includes a HDD and the like for storing picture data and audio data input from the recording/reproduction controller 206. The storage medium 207 has functionality for loop recording picture data and audio data for plural channels under control from the recording/reproduction controller 206, and stores picture data and audio data for the respective channels to be loop recorded in a different storage region for each channel. The storage medium 207 may be internally housed in a casing of the TV set 200, or may be external to the casing of the TV set 200 and connected through a digital interface.

During reproduction processing the decoder 208 decodes the picture data and audio data input from the recording/reproduction controller 206. The decoded picture data is then output to the display processor 209, and the decoded audio data is output to speakers (not shown in the drawings) .

The display processor 209 generates a signal for displaying on a display based on the picture data input from the decoder 208, and outputs the generated signal to the display 210. The display processor 209 generates a signal based on screen data input from a GUI processor 212 and outputs the signal to the display 210. The display 210 displays a picture based on the input signals.

The operation input section 211 receives operation input from an operation input device, such as a remote controller. The operation input section 211 receives input such as, for example, operation input for selecting/determining the channels for loop recording, and operation input for reproducing recorded programs.

Explanation follows regarding an example functional configuration of the recording/ reproduction controller 206, with reference to Fig. 3. The recording/reproduction controller 206 includes a recording channel determinator 311, a recording region controller 312, a channel information database 313 and the like.

The recording channel determinator 311 determines the channel(s) for loop recording. The recording channel determinator 311 determines the channel (s) for loop recording based on, for example, a loop recording channel selection/ determination operation input received by the operation input section 211. The operation input section 211 may be configured to determine specific default channels as the channels for loop recording when there is no operation input from a user. The recording channel determinator 311 notifies the channel(s) determined for recording to the recording region controller 312.

The recording region controller 312 loop records the input picture data in a specific region of the storage medium 207. The recording region controller 312 divides the loop recording region 2071 in the storage medium 207 into a number of divisions according to a number of channels capable of being recorded simultaneously by the TV set 200, for example the number of loop recording tuners capable of loop recording, and manages allocation of a channel to each of the divided regions. Namely, the recording region controller 312 divides the loop recording region 2071 into plural regions that are associated with one of the respective channels, and the recording channel determinator 311 makes associations between the divided regions and their respective determined channels. The recording region controller 312 records video data of the channels by looping in the regions corresponding to the respective channels.

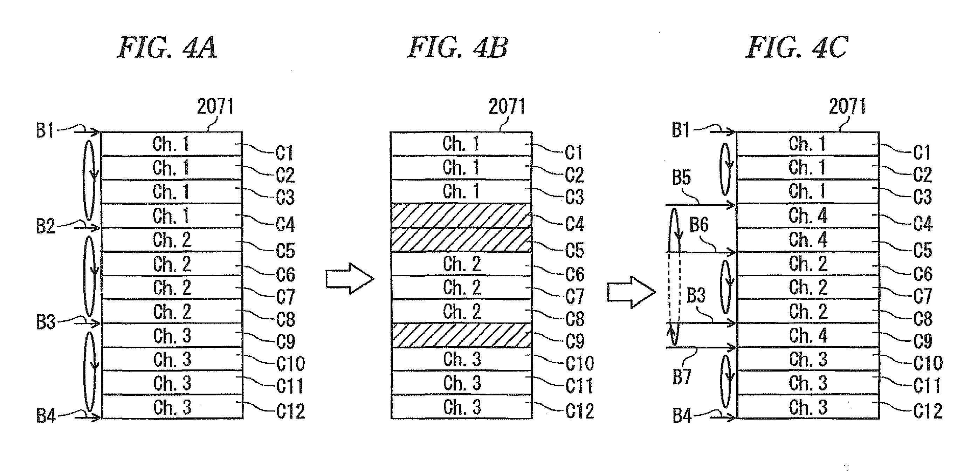

Figs. 4A to 4C illustrate processing for allocation of recording regions with the recording region controller 312. The recording region controller 312 divides the loop recording region of the storage medium 207 by, for example, the least common multiple of the number of channels capable of loop recording. In an example in which possibilities for changing the number of recording channels, such as by user operation, are to 1, 2, 3, or 4 the loop recording region is divided into 12 regions, this being the least common multiple of 1, 2, 3 and 4,

Accordingly, whether the number of channels for simultaneous loop recording is 1, 2, 3 or 4, the recording region controller 312 can allocate each of the recording channels to storage regions of substantially the same size (storage capacity) as each other. 3 regions are allocated to each channel out of the 12 divided regions when there are 4 channels for loop recording, 4 regions are allocated to each channel when there are 3 channels for loop recording, and 6 regions are allocated to each channel when there are 2 recording channels.

Note that when the number of channels that can be loop recorded simultaneously is set at a predetermined number or greater, configuration may be made by dividing by the least common multiple of all the numbers between the predetermined number and the maximum number recordable. So when the number of channels capable of loop recording simultaneously is set at 4 to 6 channels and accordingly there is a possibility of the loop recording channels changing to any one of 4, 5 or 6 channels, the recording region controller 312 divides the loop recording region into 60 regions, this being the least common multiple of 4, 5, and 6. When the number of receivable channels is lower than the number of tuners capable of being loop recorded, due for example to factors related to the location where broadcasts are being received, configuration may be made such that the recording region controller 312 divides the loop recording region by a number based on the number of receivable channels.

Fig. 4A illustrates processing when the recording region controller 312 allocates video data of channel 1 to channel 3 to regions for each of the channels and performs loop recording. In Fig. 4A, the TV set 200 has 1, 2, 3 or 4 as numbers settable for the recording channel number, and shows loop recording being performed for 3 channels.

The recording region controller 312 first, for example, divides the loop recording region into 12 regions C1 to C12, 12 being the least common multiple of the number of channels loop recordable by the TV set 200. The recording region controller 312 allocates channel 1 to regions C1 to C4, channel 2 to regions C5 to C8, and channel 3 to regions C9 to C12, and performs loop recording of video data for each of the channels.

When the recording region controller 312 receives notification from the recording channel determinator 311 to increase the number of recording channels by 1, as shown in Fig. 4B, a single region is released for each channel from the plural regions currently allocated to channels 1 to 3. In such cases the recording region controller 312 may be configured so as to prioritize release of continuous (adjacent) regions. The term "releasing" means, for example, that the allocation relationship (association relationship) between a region and a channel is reset, and/or video data written in that region is erased.

Namely, for example, the region C4 from out of the regions C1 to C4 currently allocated to channel 1 is preferentially released, and the region C5 from out of the regions C5 to C8 currently allocated to channel 2 is preferentially released, enabling continuous regions to be preferentially released. With respect to channel 3 too, by releasing region C9 from out of the regions C9 to C12 currently allocated to channel 3 the recording region for channel 3 can be suppressed from fragmentation due to region release.

As shown in Fig. 4C, the recording region controller 312 allocates the released regions C4, C5 and C9 to the new channel 4 to start loop recording, and starts loop recording the video data of channel 4. The recording region controlled 312 writes video data, for example, from the position B5 towards the position B6, and when the write position (recording position) reaches B6 then continues to write from position B3 to position B7. When the recording region controller 312 has written the video data for channel 4 up to position B7 writing is then returned to position B5, and over-write recording is performed on the region already written with video data of channel 4.

After changing the allocation of recording regions the recording region controller 312 performs loop recording for channel 1 in regions C1 to C3, channel 2 in regions C6 to C8, and channel 3 is regions C10 to C12. Note that from Fig. 4A to 4C the recording region controller 312 does not halt loop recording of video data for channels 1 to 3, and loop recording continuous in the recording regions allocated to the respective channels.

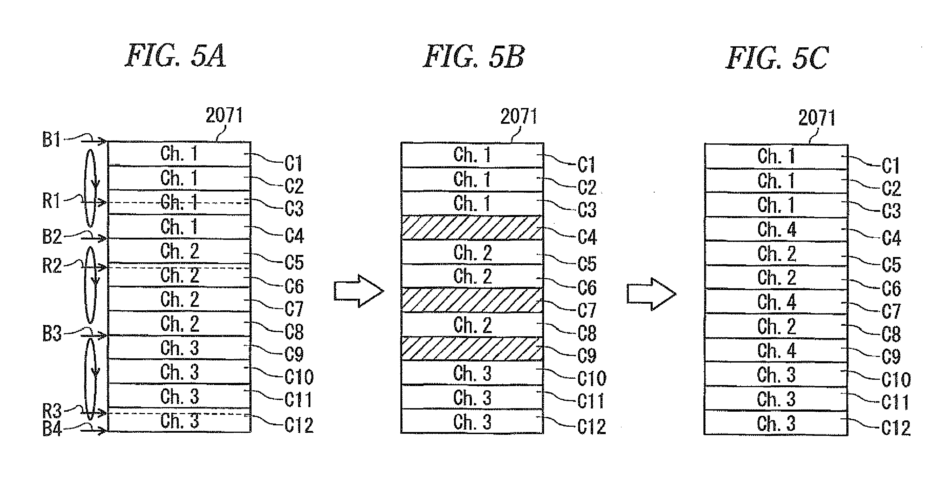

Fig. 5A to 5C illustrate control processing for recording regions by the recording region controller 312. In the processing of Fig. 4A to 4C, the recording region controller 312 adds a channel to loop recording, and preferentially releases to give adjacent regions. On the other hand, in the processing of Fig. 5A to 5C, regions are released according to the positions (recording positions) where loop recording writing is being performed. In Fig. 5A, similarly to in Fig. 4A, the TV set 200 loop records channel 1 from position B1 towards position B 2, channel 2 from position B2 towards position B3, and channel 3 from position B3 towards position B4.

When loop recording is being performed for channels 1 to 3 and the recording region controller 312 receives notification from the recording channel determinator 311 to increase the number of channels for loop recording, the recording region controller 312 determines which regions the video data for the respective channels 1 to 3 are currently being written to. The recording region controller 312 then releases the region with the oldest written data from the plural recording regions allocated to each of the channels 1 to 3, after excluding the respective regions to which data is currently being written.

Say the write position is R1 for channel 1 when notification to increase the number of recording channels is received. In response the recording region controller 312 selects for releasing, from out of the regions C1 to C4 allocated to channel 1, the region C4 having the oldest recorded data after excluding the region C3 corresponding to the write position R1. Similar applies to channels 2 and 3, and the regions C7 and C9 are selected for release from the regions allocated to the respective channels as these are the regions with the oldest recorded data after excluding regions C6 to C12 that correspond to recording positions R2 and R3. The recording region controller 312 then records video data for channel 4 by looping in the released regions C4, C7 and C9.

The TV set 200 may be configured so as to release an uneven number of recording regions from the respective channels for which loop recording is being performed when recording channel (s) are added, or may be configured to release regions allocate to at least one channel out of the channels being loop recorded. The TV set 200 may also be configured such that the loop recording region 2071 is not always divided by the least common multiple of the number of channels simultaneously loop recordable by the TV set 200, and may be configured so as to divide into recording regions numbering at least the maximum number of channels simultaneously recordable or greater. Namely, when there are 4 channels that can be simultaneously loop recorded the loop recording region 2071 may be divided into 4 or into more than 4 divisions.

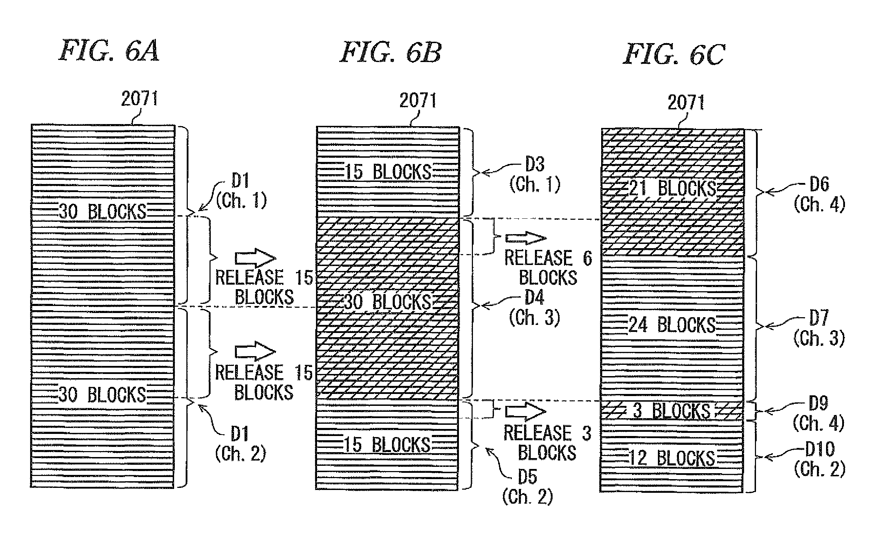

Figs. 6A to 6C illustrate allocation processing by the recording region controller 312 according to the number of channels loop recordable, and the bit rate of channels for recording. In Figs. 4A to 4C and Figs. 5A to 5C, the same number of regions are allocated for loop recording for each of the channels. However, for example, when the channels have different bit rates from each other, were the same number of regions to be allocated to each of the respective channels then this would result in the durations before recorded data of respective channels is over written by loop recording being different from each other. Accordingly, in the processing of Fig. 6A to 6C, different numbers of regions are allocated to each of the channels according to the bit rates of the respective pictures. Information regarding the bit rate of video data for each of the channels may, for example, be stored in advance in the TV set 200. Alternatively the TV set 200 maybe configured to analyze the video data and acquire information about the bit rates.

In this example a case is considered in which the maximum number of channels that can be loop recorded is, for example, 3, and the bit rate of channel video data for loop recording is one or other of 16Mbps and 32Mbps. Accordingly, in order to make the recording time in loop recording of one loop for each of the channels the same as each other the following number of regions needs to be set for changes to the number of channels and bit rates for loop recording.

For example, when the performing recording for two channels worth at 16Mbps bit rate per channel at least two regions are required because the length of recording duration for each loop for each of the 2 channels is the same as each other. Similarly, at least 3 regions are required when recording 1, channel each of a 16Mbps bit rate channel and a 32Mbps bit rate channel in order to achieve the same length of recording duration for each loop for the 2 channels.

When there are 3 channels worth recorded of 16Mbps bit rate channels then at least 3 regions are required in order to make the length of recording duration for each loop the same as each other for the 3 channels. However, when recording 2 channels worth of 16Mbps bit rate channels and recording a single channel's worth of a 32Mbps bit rate channel then at least 4 regions are required in order to achieve the same length of recording duration for each loop for each of the 3 channels. Similarly, at least 5 regions are required when recording 1 channel's worth of 16Mbps bit rate channel and recording two channel's worth of 32Mbps bit rate channels in order to achieve the same length of recording duration for each loop for each of the 3 channels.

In the above example preferably division is made into 60 regions, since 60 is the least common multiple of the numbers of regions required in each of the cases. Namely if the ratio of the bit rate of the channels for recording is, for example, x: y: z (wherein x, y and z are coprime numbers) then preferably division is made into (x + y + z) regions, the sum of the values of their relative ratio, in order to make the length of recording duration to be same for each of the channels. Dividing by the least common multiple of the sum of the values of the bit rate ratios of the channels that can be simultaneously loop recorded enables the length of recording duration for each loop of the channels to be the same as each other even when the bit rates are different from each other.

In Fig. 6A, for example, the recording region controller 312 allocates 30 regions to each of channels 1 and 2 having the same bit rate as each other, and executes loop recording. When a channel 3 of twice the bit rate of channels 1 and 2 is then added for loop recording then, as shown in Fig. 6B, 15 regions are released for each channel from the regions allocated to channels 1 and 2, and reallocated to channel 3. Similarly, when loop recording of channel 1 is halted and loop recording for channel 4 of the same bit rate as channel 3 is added, the recording region controller 312 releases a number of regions from the regions allocated to each of the channels 2 and 3 according to the bit rates of each of the channels, and reallocates these to channel 4.

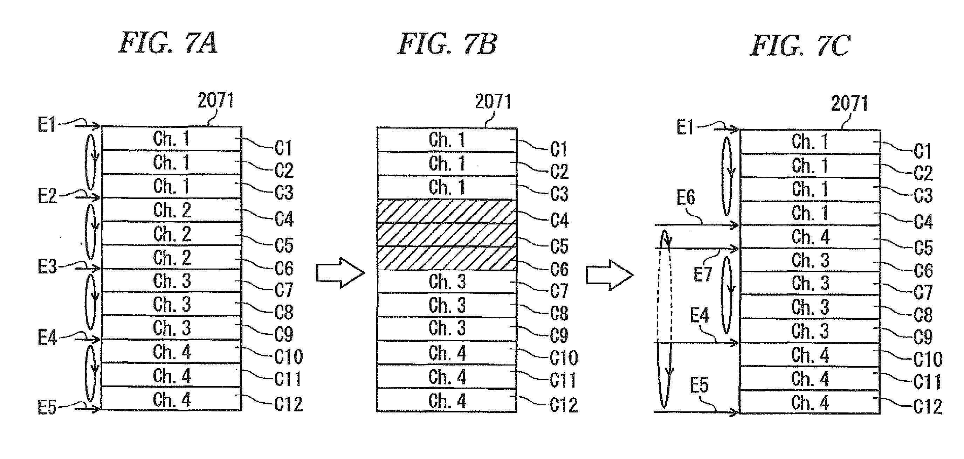

Fig. 7A to 7C illustrate allocation processing for the recording region controller 312.when the possible number of recording channels changes to any one of 1, 2, 3 or 4. The recording region controller 312 divides the loop recording region 2071 into 12 regions C1 to C12. As shown in Fig. 7A, channel 1 is allocated to regions C1 to C3, channel 2 to regions C4 to C6, channel 3 to regions C7 to C9 and channel 4 to regions C10 to C12, and loop recording is performed.

When the recording region controller 312 has received an instruction to halt loop recording of channel 2 then, as shown in Fig. 7B the recording region controller 312 releases the regions C4 to C6 that were allocated to channel 2. Then out of the regions C4 to C6 the recording region controller 312 allocates the region C4 to channel 1, this being the region that is continuous (adjacent) to the regions already allocated to channel 1. Similarly, out of the regions C4 to C6 the recording region controller 312 allocates the region C6 to channel 3, this being continuous to the regions performing loop recording of the video data for channel 3. The recording region controller 312 then allocates the remaining region C5 to channel 4.

In Fig. 7A to 7C, allocation is by a uniform number of regions for each of the channels. On the other hand, configuration may be made such that when, for example, the bit rate for each of the channels is different from each other, the recording region controller 312 allocates numbers of regions to the channels according to the respective bit rates. Alternatively, the recording region controller 312 does not necessarily have to divide the loop recording region 2071. by the least common multiple of the possible number of channels the TV set 200 can loop recording simultaneously, and configuration may be made with division into a number of recording regions that is the maximum number of channels simultaneously loop recordable or greater.

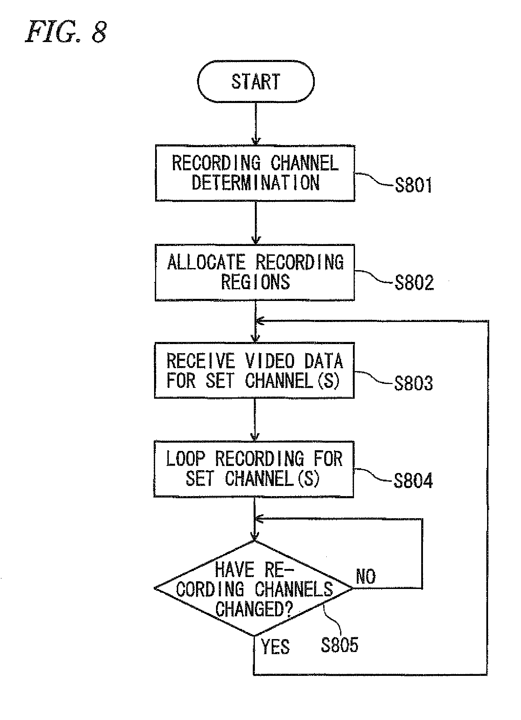

Fig. 8 illustrates processing flow for allocating recording channels by the TV set 200. First the recording channel determinator 311 determines how many channels are to be loop recorded (S801). The recording channel determinator 311 determines the channels for loop recording according to operation input by a user, for example. Alternatively the channels for loop recording may be preset in the TV set 200.

The recording region controller 312 then divides the loop recording region 2071 by a number according to the number of loop recording channels (S802). Namely, the recording region controller 312 divides the loop recording region 2071 by, for example, the least common multiple of the number of channels possible for simultaneously loop recording by the TV set 200. Alternatively the recording region controller 312 may divide the loop recording region 2071 by a number according to the number of channels possible simultaneously loop recording and according to the bit rate of the channels loop recordable.

The recording/reproduction controller 206 then instructs the receiver 201 to receive video data for the channels set at S801, and the receiver 201 receives the video data of the set channels (S803). The recording region controller 312 performs loop recording (S804) of the received video data of the channels to the respective regions allocated at step 802. When in receipt of notification from the recording channel determinator 311 to change the recording channels (S805) the recording region controller 312 re-executes the processing of S802, and re-allocates recording regions to each of the channels.

Although embodiments are exemplified, these are merely examples, and are not intended to place any limitations whatsoever on the scope of the invention. The invention may be embodied in various ways, by variously applying omissions, substitutions and changes without departing from the spirit of the invention. Not only the embodiments as they are but also such modifications are included in the scope of Claims and their equivalents.

## Claims

1. A recording apparatus comprising:
a reception module configured to receive video data of a first number of channels or fewer;
a management module configured to manage a storage region of a storage medium in units of a divided region, the divided region being provided in plurality correspondingly with the first number;
a determination module configured to determine recording channels;
an allocation module configured to allocate a part of the divided regions to each of the recording channels when the determination module determines the plurality of recording channels; and
a control module configured to control such that video data of the recording channels is written into the allocated divided regions,
wherein, when the determination module determines to change the recording channels, the allocation module allocates one or more of the recording channels after change to one or more of the divided regions previously allocated for the recording channels before change.

2. The apparatus of Claim 1,
wherein the allocation module allocates the same number of divided regions to each recording channel.

3. The apparatus of Claim 1,
wherein the allocation module allocates the divided region to each recording channel in plurality correspondingly with a bit rate of the video data of each recording channel.

4. The apparatus of claim 1,
wherein, when the determination module determines to increase the recording channels, the allocation module releases at least one of the divided regions previously allocated for each recording channel before increase and allocates an added recording channel to the released divided regions.

5. The apparatus of Claim 4,
wherein, when the determination module determines to increase the recording channels, the allocation module releases the divided region storing the oldest video data among the divided regions previously allocated for each recording channel before increase other than the divided region currently being written with video data.

6. The apparatus of Claim 1,
wherein, when the determination module determines to halt recording of a first recording channel, the allocation module allocates the divided regions of the first recording channel to another channel which has the divided regions adjacent to the divided regions of the first recording channel.

7. The apparatus of Claim 1,
wherein the number of the divided regions provided in the storage region of the storage medium is the least common multiple of the number of possible recording channels that the determination module can determinate.

8. The apparatus of Claim 7,
wherein the number of the divided regions provided in the storage region of the storage medium is set based on a bit rate of the video data of each recording channel.

9. A recording method comprising:
receiving video data of a first number of channels or fewer;
managing a storage region of a storage medium in units of a divided region, the divided region being provided in plurality correspondingly with the first number;
determining recording channels;
allocating a part of the divided regions to each of the recording channels when the plurality of recording channels are determined; and
writing video data of the recording channels into the allocated divided regions,
wherein, when the recording channels are changed, one or more of the recording channels after change are allocated to one or more of the divided regions previously allocated for the recording channels before change.
